# DEMANDE DE BREVET EUROPEEN

(11) **EP 1 022 198 A1**
(43) Date de publication de la demande: **26.07.2000**
(21) Numéro de dépôt: 99400119.6
(22) Date de dépôt: 20.01.1999
(51) Int. Cl.: B60R 21/28

(54) **Sac de sécurité gonflable, à membrane d'obturation du trou d'évent**

(71) Demandeur: Aerazur, 92130 Issy les Moulineaux (FR)
(72) Inventeur: Santacruz, Michel, 76320 Elbeuf (FR); Obadia, Jean-Marc, 76113 Sahurs (FR); Goujon, Stéphane, 27740 Poses (FR)
(74) Mandataire: Hud, Robert

(57) **Abrégé**

Le sac de sécurité gonflable 1 présente un trou d'évent 2 obturé de façon totalement étanche par une membrane 3 fixée sur la paroi du sac 1. Lors du déploiement du sac 1, la membrane 3 est maintenue en position d'obturation. Au moment où l'occupant 5 pénètre dans le sac 1, le volume du sac augmente du fait du gonflement de la membrane 3. Du fait de la pénétration de l'occupant 5 dans le sac 1, la membrane 3 arrive aux limites de son élasticité et se rompt en libérant les gaz qui s'échappent par le trou d'évent 2.

Le sac de sécurité gonflable permet d'obtenir une pression de gonflage importante, ainsi qu'un gonflage plus rapide.

## Description

La présente invention concerne les sacs de sécurité gonflables pour véhicules automobiles.

Dans les dispositifs conventionnels de sac de sécurité gonflable, le sac présente un trou d'évent qui est en permanence ouvert et a pour rôle, lorsque le sac s'est déployé à la suite d'un choc, de lui permettre de se dégonfler partiellement lorsque l'occupant pénètre dans le sac, en amortissant ainsi le choc.

Ces dispositifs conventionnels présentent l'inconvénient que, comme le trou d'évent est constamment ouvert, une perte de gaz se produit dès le début du gonflage du sac de sorte d'une part que le volume du sac gonflé est plus faible et que, d'autre part, le temps de gonflage est plus long.

Par le document de brevet US-A-3 527 475, il est connu un sac de sécurité gonflable qui présente dans sa paroi un trou d'évent et une pièce fixée sur le trou d'évent, cette pièce étant conçue pour se rompre et laisser s'échapper les gaz lorsqu'un occupant s'enfonce dans le sac. Ce document propose que la dite pièce soit éventuellement en la même matière que le sac mais sensiblement moins épaisse, particulièrement en polychlorure de vinyle.

Par le document de brevet US-A-4 805 930, on connaît un sac de sécurité gonflable dans lequel un premier et un second éléments textiles de la paroi du sac se recouvrent par leurs bords et sont cousus ensemble dans cette zone de recouvrement. En cas d'augmentation de la pression à l'intérieur du sac, les éléments cousus se rompent en permettant l'échappement des gaz.

Par le document de brevet DE-A-19 62 890, il est décrit un sac de sécurité gonflable comportant, devant le trou d'évent, un élément formant clapet réaliser en une matière non élastique telle que le Téflon. Ce clapet s'ouvre pour une pression intérieure déterminée afin de permettre l'échappement des gaz.

Enfin, par le document de brevet DE-U-296 17 586, on connaît un sac de sécurité gonflable dont le trou d'évent est obturé par une feuille d'aluminium présentant, comme on le voit aux figures 4a, 4b et 4c, des amorces de rupture destinées, lors de la rupture, à éviter des projections de métal.

La présente invention a pour objet de remédier aux inconvénients présentés par les sacs de sécurité gonflables conventionnels. Elle propose à cet effet un sac de sécurité gonflable conçu pour améliorer l'amortissement de l'occupant d'un véhicule en cas d'accident, en permettant d'utiliser tous les gaz générés par le système pyrotechnique, ou autre, pour gonfler le sac. Elle permet ainsi d'obtenir une pression de gonflage plus importante du sac de sécurité gonflable, un gonflage plus rapide de celui-ci, ainsi qu'une augmentation du volume du sac.

Selon l'invention, le sac de sécurité gonflable comprend un trou d'évent ménagé dans sa paroi, et une membrane fixée sur la dite paroi pour obturer de façon étanche le dit trou d'évent, la dite membrane présentant une limite d'élasticité inférieure à celle de la paroi du sac, de façon que l'augmentation de la pression intérieure du sac produite par l'enfoncement dans celui-ci de l'occupant du véhicule provoque la rupture de la dite membrane et l'échappement des gaz par le trou d'évent pour assurer l'amortissement de l'occupant ; il se caractérise en ce que la membrane est réalisée en silicone d'épaisseur constante et ne présente pas d'amorce de rupture.

La membrane utilisée est ainsi d'une obtention facile et d'une utilisation particulièrement fiable.

Selon une caractéristique complémentaire de l'invention, on choisit le silicone dont est faite la membrane de façon que celle-ci soit insensible aux variations de température, le sac pouvant alors présenter un fonctionnement identique sur une large plage de températures allant par exemple de + 85°C à-35°C.

Selon une autre caractéristique encore de l'invention, le silicone dont est faite la membrane équipant le sac présente une élasticité qui permet, lorsque l'occupant pénètre dans le sac, une augmentation sensible du volume du sac.

Pour bien faire comprendre l'invention on en décrira ci-après à titre d'exemple sans caractère limitatif, une forme d'exécution préférée en référence au dessin schématique annexé dans lequel :
la figure 1 montre schématiquement un sac de sécurité gonflable en phase de déploiement à la suite d'un choc, l'occupant du véhicule ainsi équipé n'ayant pas encore pénétré dans le sac ;
la figure 2 est une vue analogue à la figure 1, au moment où l'occupant a pénétré dans le sac ; et
la figure 3 est une vue fragmentaire en coupe, à plus grande échelle, montrant la paroi du sac en cours de déploiement, le trou d'évent ménagé dans cette paroi et la membrane obturant ce trou.

Le sac de sécurité gonflable 1 selon l'invention est réalisé de façon conventionnelle avec un trou d'évent 2 ménagé dans sa paroi.

Selon l'invention le trou d'évent 2 est obturé de façon totalement étanche par une membrane 3 réalisée en silicone, d'épaisseur constante et sans amorce de rupture. La membrane 3 est fixée sur la paroi du sac 1 par exemple par collage.

La limite d'élasticité de la membrane 3 est inférieure à celle de la paroi du sac 1, et elle est calculée pour que la membrane se rompe lorsqu'elle est soumise à une pression égale à la somme de la pression de gonflage du sac et de la pression supplémentaire entraînée par la pénétration de l'occupant 5 du véhicule dans le sac à la suite du choc.

Le fonctionnement du sac de sécurité gonflable selon l'invention est le suivant :

Au repos, le sac de sécurité gonflable est plié dans son boîtier, avec la membrane qui obture son trou d'évent.

Le déclenchement du sac de sécurité gonflable, à l'occasion d'un choc, provoque l'ouverture du boîtier dans lequel il est logé. Le sac se déploie avec sa membrane maintenue en position d'obturation car la pression à l'intérieur du sac n'est pas suffisante pour la rompre.

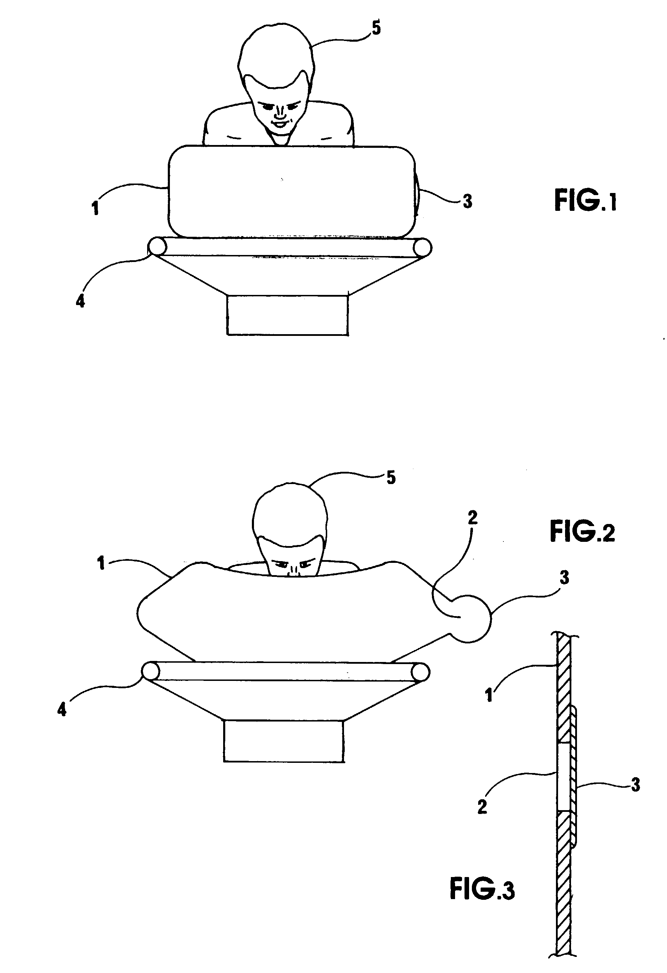

Le sac de sécurité 1 se gonfle donc et se place sur le volant 4, en attendant que l'occupant 5 du véhicule pénètre dans le sac 1. La pression du sac 1 n'est pas suffisante pour rompre la membrane 3 (figure 1) .

Au moment où l'occupant 5 pénètre dans le sac 1, la pression monte à l'intérieur du sac et commence à gonfler la membrane 3.

L'occupant 5 continue à pénétrer dans le sac de sécurité gonflable 1 (figure 2). Le volume du sac 1 augmente du fait du gonflement maximum de la membrane 3.

La pression dans le sac 1 devient telle, du fait de la pénétration de l'occupant 5 dans ce sac, que la membrane 3 arrive aux limites de son élasticité et se rompt en pleine peau, en libérant les gaz qui s'échappent par le trou d'évent 2.

L'invention, de par son concept, est particulièrement simple à réaliser car elle ne comporte qu'un seul élément (la membrane) à ajouter sur la face du sac.

La membrane 3 est réalisée en silicone et n'est donc pas sensible aux variations de température pouvant influer sur le système du sac de sécurité gonflable.

L'invention est réalisée à partir d'un procédé permettant d'obtenir un état de surface très lisse, sans défaut d'aspect. Il n'y a donc aucune amorce de rupture. La rupture de la membrane 3, arrivée à sa limite d'élasticité, s'effectue donc toujours en pleine peau.

L'invention, de par le principe de son fonctionnement, participe à l'amortissement de l'occupant du véhicule, en augmentant le volume du sac, avant de se rompre.

Le dispositif à membrane selon l'invention permet de conserver tous les gaz en fournissant un sac totalement étanche au niveau de l'évent, jusqu'à la rupture de la membrane.

On comprendra que la description ci-dessus a été donnée à titre d'exemple, sans caractère limitatif, et que des adjonctions ou des modifications constructives pourraient y être apportées sans sortir du cadre de la présente invention.

## Revendications

1. Sac de sécurité gonflable comprenant un trou d'évent (2) ménagé dans sa paroi (1) et une membrane (3) fixée sur la dite paroi (1) pour obturer de façon étanche le dit trou d'évent (2), la dite membrane (3) présentant une limite d'élasticité inférieure à celle de la paroi (1) du sac, de façon que l'augmentation de la pression intérieure du sac produite par l'enfoncement dans celui-ci de l'occupant (5) du véhicule provoque la rupture de la dite membrane (3) et l'échappement des gaz par le trou d'évent (2) pour assurer l'amortissement de l'occupant, caractérisé en ce que la membrane (3) est réalisée en silicone d'épaisseur constante et ne présente pas d'amorce de rupture.

2. Sac de sécurité gonflable selon la revendication 1, caractérisé en ce que le silicone dont est faite ladite membrane (3) est choisi insensible aux variations de température.

3. Sac de sécurité gonflable selon la revendication 1 ou la revendication 2, caractérisé en ce que le silicone dont est faite ladite membrane (3) présente une élasticité permettant, lorsque l'occupant pénètre dans le sac, une augmentation sensible du volume du sac assurant un amortissement de l'occupant.
